(19) Europäisches Patentamt
European Patent Office
Office européen des brevets

(11) **EP 2 582 140 A2**

(12) **EUROPEAN PATENT APPLICATION**
published in accordance with Art. 153(4) EPC

(43) Date of publication:
**17.04.2013 Bulletin 2013/16**

(51) Int Cl.:
**H04N 7/32** (2006.01)

(21) Application number: **11792625.3**

(22) Date of filing: **18.05.2011**

(86) International application number:
**PCT/KR2011/003665**

(87) International publication number:
**WO 2011/155714 (15.12.2011 Gazette 2011/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.08.2010 KR 20100077254**
**11.06.2010 US 353830 P**

(71) Applicants:
• **Samsung Electronics Co., Ltd.**
**Suwon-si, Gyeonggi-do, 443-742 (KR)**
• **University Of Southern California**
**Los Angeles, CA 90089-2561 (US)**

(72) Inventors:
• **LEE, Jae Joon**
**Yongin-si**
**Gyeonggi-do 449-712 (KR)**
• **WEY, Ho Cheon**
**Yongin-si**
**Gyeonggi-do 449-712 (KR)**

• **GODWIN, Shen**
**Los Angeles**
**California 90089-2561 (US)**
• **KIM, Woo Shik**
**Los Angeles**
**California 90089-2561 (US)**
• **ANTONIO, Ortega**
**Los Angeles**
**California 90089-2561 (US)**
• **SUNIL, Narang**
**Los Angeles**
**California 90089-2561 (US)**
• **PARK, Du-Sik**
**Yongin-si**
**Gyeonggi-do 449-712 (KR)**

(74) Representative: **Hylarides, Paul Jacques et al**
**Arnold & Siedsma**
**Sweelinckplein 1**
**2517 GK The Hague (NL)**

(54) **SYSTEM AND METHOD FOR ENCODING/DECODING VIDEOS USING EDGE-ADAPTIVE TRANSFORM**

(57) Provided is an image coding and decoding system using an edge-adaptive transform (EAT) and a method, thereof. The coding system may encode an inputted image based on the EAT or may encode the inputted image by selectively using one of the EAT and a discrete cosine transform (DCT).

FIG. 1

EP 2 582 140 A2

## Description

### CROSS-REFERENCE TO RELATED APPLICATION

This application claims the benefit of US Provisional Application No. 61/353,8-10, filed June 11, 2010, and Korean Patent Application No. 10-1-010-00772541, filed on August 11, 2010 in the Korean Intellectual Property Office, the disclosure of which is incorporated herein by reference.

### BACKGROUND OF THE INVENTION

### FIELD OF THE INVENTION

One or more embodiments relate to an image coding and decoding system using an edge-adaptive transform (EAT) and a method thereof.

### DISCUSSION OF THE BACKGROUND

A discrete cosine transform (DCT) may be an example of a conventional coding method. The DCT may be an orthogonal transform coding scheme using a discrete cosine function as a coefficient for transforming a time based picture signal into a frequency based picture signal. International Telecommunication Union Telecommunication Standardization Sector (ITU-T) has adapted the DCT as a teleconference compression technology of a teleconferencing telephone coding scheme H.261. Also, the DCT has been adopted by a Moving Picture Experts Group (MPEG) that is an international standard of a moving picture coding scheme, and is a dominate technology among high-efficiency coding and compression technologies. The DCT may decompose a time based picture signal to be transformed into several frequency domains, the frequency domains including frequency areas with a high signal power and frequency areas with a low signal power. A picture signal power may tend to concentrate at a low frequency and thus, when quantization is performed based on an appropriate bit distribution, data may be efficiently compressed using a small number of bits.

Thus, there is a desire for a more efficient image coding and decoding system and method.

### SUMMARY OF THE INVENTION

According to an aspect, there is provided a coding system, including a predictive-coder to perform predictive-coding of pixels in an inputted image, an edge map generator to generate information indicating edge locations in the inputted image, a graph generator to generate a graph based on the generated information, a transform unit to transform the predictive-coded pixels based on the graph, and an edge map coder to encode the generated information.

The transform unit may transform the predictive-coded pixels based on an edge-adaptive transform (EAT) coefficient generated based on an eigenvector matrix of a Laplacian of the graph.

The transform unit may generate an EAT coefficient based on a transform that is previously calculated with respect to pixels for a fixed set of edge structures that are common from among the predictive-coded pixels and stored, and may transform the predictive-coded pixels based on the generated EAT.

The transform unit may generate the EAT coefficient based on a transform for each of connected components of the graph, and transforms the predictive-coded pixels based on the generated EAT coefficient.

According to another aspect, there is provided a coding system, including a predictive coder to perform predictive-coding of pixels in an inputted image, an optimal mode determining unit to select an optimal mode, and an edge-adaptive transform (EAT) unit to perform EAT with respect to the predictive-coded pixels when an EAT mode is selected as the optimal mode, and the optimal mode is selected based on a rate-distortion (RD) cost of the EAT and a rate-distortion cost of a discrete cosine transform (DCT).

According to still another aspect, there is provided a decoding system, including an entropy decoder to entropy-decode an inputted bitstream to decode pixels, an information decoder to decode information indicating edge locations in the inputted bitstream, a graph generator to generate a graph based on the decoded information, and a inverse transform unit to inverse transform the entropy-decoded pixels, based on the graph.

According to yet another aspect, there is provided a decoding system, including an entropy-decoder to entropy-decode an inputted bitstream to decode pixels, and an inverse edge-adaptive transform (EAT) unit to perform inverse EAT of the entropy-decoded pixels when a transform mode is in an EAT mode, and the transform mode is determined based on an RD cost of the EAT and an RD cost of a discrete cosine transform (DCT).

### BRIEF DESCRIPTION OF THE DRAWINGS

The accompanying drawings, which are included to provide a further understanding of the invention and are incorporated in and constitute a part of this specification, illustrates embodiments of the invention, and together with the description serve to explain the principles of the invention.

FIG. 1 is a block diagram illustrating a configuration of a coding system according to an embodiment.
FIG. 2 is a diagram illustrating an example of a plurality of pixels according to an embodiment.
FIG.3 is a block diagram illustrating a configuration of a coding system according to another embodiment.
FIG.4 is a block diagram illustrating a configuration of a decoding system according to an embodiment.

FIG. 5 is a block diagram illustrating a configuration of a decoding system according to another embodiment.

FIG. 6 is a flowchart illustrating a coding method according to an embodiment.

FIG. 7 is a flowchart illustrating a coding method according to another embodiment.

FIG. 8 is a flowchart illustrating a decoding method according to an embodiment.

FIG. 9 is a flowchart illustrating a decoding method according to another embodiment.

## DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element is referred to as being "connected to" another element, it can be directly connected to the other element, or intervening elements may be present.

Hereinafter, exemplary embodiments of the present invention will be described with reference to the accompanying drawings.

An edge-adaptive transform (EAT) according to example embodiments may be used independently or together with a discrete cosine transform (DCT). The EAT may generate information indicating edge locations, for at least one block with respect to an inputted image. For example, an edge map may be generated as the information indicating the edge locations. A graph may be generated based on the edge map, and a transform may be constructed based on the graph.

In an embodiment where the EAT is used in conjunction with the DCT, when a rate-distortion (RD) cost for an EAT coefficient, which includes a bit rate used to encode the edge map, is less than an RD cost for a DCT coefficient, the EAT may be used. In this example, the edge-map may be encoded and transmitted to a decoding system as side information. The decoding system may receive the EAT coefficient and the edge map for at least one block with respect to the image, and may decode a bitstream. The decoding system may perform an inverse transform, a dequantization, and a predictive compensation.

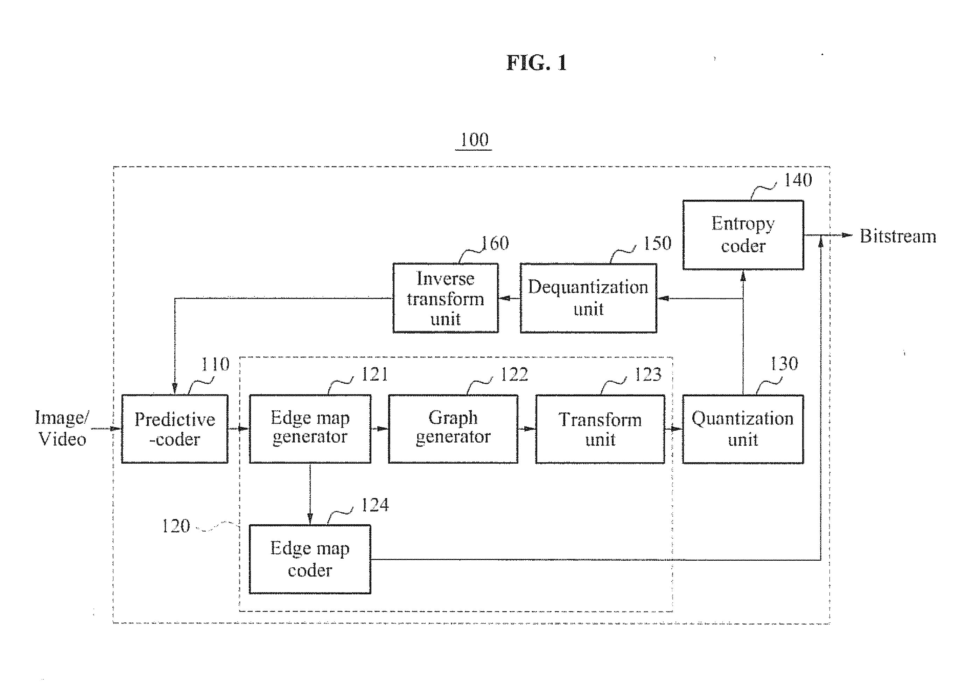

FIG. 1 illustrates a configuration of a coding system 100 according to an embodiment. The coding system 100 may use an edge-adaptive transform (EAT) independently. Referring to FIG. 1, the coding system 100 may include a predictive coder 110, an EAT unit 120, a quantization unit 130, an entropy coder 140, a dequantization unit 150, and an inverse transform unit 160.

The predictive coder 110 may predictive-code pixels in an inputted image. For example, the predictive coder 110 may predict each block of pixels in the inputted image, such as an image or a video frame, based on reconstructed pixels obtained from previously coded blocks. In this example, a residual block may be generated from each block of predictive-coded pixels. The reconstructed pixels may be obtained by the dequantization unit 150 and the inverse transform unit 160. The dequantization unit 150 and the inverse transform 160 will be described later. Throughout this specification, a block may be constructed by a set of pixels, for example, N x N pixels.

The EAT unit 120 may perform an EAT with respect to the predictive-coded pixels. The EAT unit 120 may include an edge map generator 121, a graph generator 122, a transform unit 123, and an edge map coder 124.

The edge map generator 121 may generate information indicating edge locations in the inputted image. For example, the edge map generator 121 may detect the edge locations from the residual block to generate a binary edge map indicating the edge locations.

The graph generator 122 may generate a graph based on the generated information. In this example, the graph generator 122 may generate the graph by connecting each pixel in the residual block to a neighbor pixel when an edge does not exist between the corresponding pixel and the corresponding neighbor pixel.

For example, the graph may be generated by four or eight connected neighbor pixels. The graph may be generated based on an adjacency matrix A. When a pixel i and a pixel j are neighbors not separated by an edge, the adjacency matrix A may satisfy a condition of $A(i, j) = A(j, i) = 1$. When the pixel i and the pixel j are not neighbor pixels or are separated by the edge, the adjacency matrix A may satisfy a condition of $A(i, j) = A(j, i) = 0$.

For another example, in the adjacency matrix A, a value of 1 for connected pixels may be replaced with a distance between the connected pixels. Pixels that are adjacent horizontally or vertically are closer than pixels adjacent diagonally and thus, a predetermined value based on the distance between the connected pixels may be used instead of 1.

A degree matrix D may be calculated from the adjacency matrix A. In this example, the degree matrix D may satisfy a condition that $D(i, j)$ has, as a value, non-zero entries in the $i^{th}$ row of the adjacency matrix A, or may satisfy a condition of $D(i, j) = 0$ for all $i \neq j$.

The transform unit 123 may transform the predictive-coded pixels, based on the graph. For example, the transform 123 may construct the EAT on the graph by using eigenvectors of the Laplacian of the graph. A matrix $L$ denoting the Laplacian of the graph may be calculated based on a difference between the degree matrix D and the adjacent matrix A. For example, the Laplacian of the graph may be calculated as expressed by Equation 1.

[Equation 1]

$$L = D - A$$

The matrix L may be a symmetric matrix and thus, an eigenvector of the matrix L may be calculated based on cyclic Jacobi method.

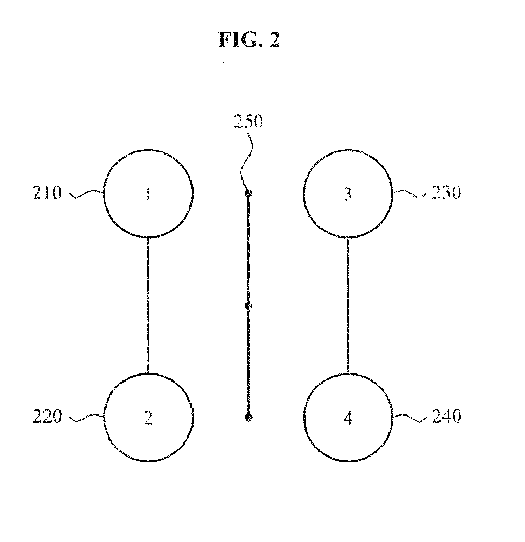

FIG. 2 illustrates an example of a plurality of pixels according to an embodiment.

Referring to FIG. 2, four circles 210 through 240 may denote four pixels, respectively. A line 250 may denote an edge separating pixels 210 and 220 from pixels 230 and 240. In this example, an adjacency matrix A, a degree matrix D, and a matrix L associated with the Laplacian may be expressed by Equations 2 through 4.

[Equation 2]

$$A = \begin{bmatrix} 0 & 1 & 0 & 0 \\ 1 & 0 & 0 & 0 \\ 0 & 0 & 0 & 1 \\ 0 & 0 & 1 & 0 \end{bmatrix}$$

[Equation 3]

$$D = \begin{bmatrix} 1 & 0 & 0 & 0 \\ 0 & 1 & 0 & 0 \\ 0 & 0 & 1 & 0 \\ 0 & 0 & 0 & 1 \end{bmatrix}$$

[Equation 4]

$$L = \begin{bmatrix} 1 & -1 & 0 & 0 \\ -1 & 1 & 0 & 0 \\ 0 & 0 & 1 & -1 \\ 0 & 0 & -1 & 1 \end{bmatrix}$$

In this example, an eigenvector matrix of Laplacian may be calculated based on the cyclic Jacobi method, and an EAT coefficient may be constructed based on the calculated eigenvector matrix, as expressed by Equation 5.

[Equation 5]

$$E^t = \begin{bmatrix} \dfrac{1}{\sqrt{2}} & \dfrac{1}{\sqrt{2}} & 0 & 0 \\ 0 & 0 & \dfrac{1}{\sqrt{2}} & \dfrac{1}{\sqrt{2}} \\ -\dfrac{1}{\sqrt{2}} & \dfrac{1}{\sqrt{2}} & 0 & 0 \\ 0 & 0 & -\dfrac{1}{\sqrt{2}} & \dfrac{1}{\sqrt{2}} \end{bmatrix}$$

In Equation 5, $E^t$ may denote the EAT coefficient.

Referring again to FIG. 1, to prevent complex calculations, a pre-calculaled set of transforms corresponding to the most popular edge configurations may be stored. Simpler alternative transforms, for example, a Haar wavelet transform, may be used by dividing the graph into connected components and applying a separate transform in each connected component. For example, when a graph for a 4 x 4 block may include two connected components and each component includes 8 pixels. An EAT with respect to a 2 x 2 image block may be obtained by connecting each row of the 2 x 2 block to be a 4 x 1 vector and multiplexing the 4 x 1 vector with $E$. In this example, a 3-level Haar wavelet transform may be performed on the pixels in each component.

The edge map coding unit 124 may encode generated information. The information generated by the edge map generator 121 may be encoded by the edge map coder 124. The encoded information may be included in the bitstream generated with respect to the inputted image, or may be transmitted with the bitstream to the decoding system. The information generated by the edge map generator 121 may include, for example, an edge map.

The quantization unit 130 may quantize transformed pixels, and the entropy coder 140 may entropy-code the quantized pixels to generate a bitstream. In this example, the edge map encoded by the edge map coder 124 and encoded coefficient may be included in the generated bitstream or may be transmitted, to the decoding system, together with the bitstream.

The quantized pixels may be reconstructed by the dequantization unit 150 and the inverse transforms unit 160, and may be used by the predictive-coder 110 to predictive-code the pixels in the inputted image.

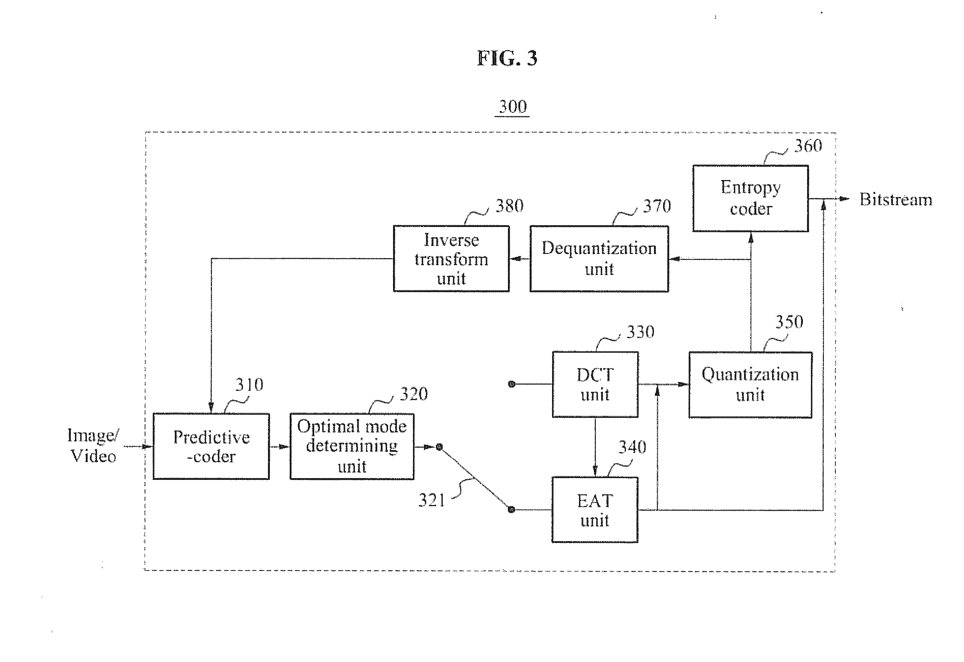

FIG. 3 illustrates a configuration of a coding system 300 according to another embodiment.

The coding system 300 may perform a hybrid transform. For example, the coding system 300 may be configured to select one of an EAT and a DCT, based on an RD cost. The coding system 300 may include a predictive coder 310, an optimal mode determining unit 320, a DCT unit 330, an EAT unit 340, a quantization unit 350, an entropy coder 360, a dequantization unit 370, and an inverse transform unit 380. The EAT 340 may correspond to the EAT 120 of FIG. 1, and the DCT 330 may correspond to a block performing a DCT. The predictive encoder 310, the quantization unit 350, the entropy-coder 360, the dequantization unit 370, and the inverse transform unit 380 may correspond to the predictive coder 110, the quantization unit 130, the entropy coder 140, the dequantization unit 150, and the inverse transform 160, respectively. Therefore, detailed descriptions thereof will be omitted.

An inputted image may be predictive-coded by the predictive coder 310, and a residual block may be generated from each block of predictive-coded pixels.

The optimal mode determining unit 320 may select one of a DCT mode and an EAT mode. The optimal mode determining unit 320 may calculate a bit rate and a distortion of each of the DCT and the EAT. The optimal mode determining unit 320 may calculated a rate-distortion cost of each of the DCT and the EAT, based on the calculated bit rate and distortion.

For example, a transform coefficient may be quantized for a predetermined quantization operation size (Q), and for each case of using the DCT and using the EAT, based on Q. A bit rate (R) and a distortion (D) for the quantized coefficient may be calculated. An RD cost for the DCT may be calculated as $D_{dct} + \lambda(Q) R_{dct}$. In this example, $D_{dct}$ may denote a distortion for the DCT, and $R_{dct}$ may denote a rate for the quantized coefficient of the DCT. A value for lambda may be determined based on the predetermined Q. An edge map may be encoded and $P_{edges}$ may be determined, to perform the EAT. In this example, an RD cost for the EAT may be calculated as $D_{eat} + (Q) (R_{eat} + R_{edges})$. In this example, $D_{eat}$ may denote a distortion for the EAT, and $R_{eat}$ may denote a rate for quantized coefficient of the EAT.

In this example, when the RD cost for the EAT is less than the RD cost for the DCT, the EAT 340 may operate. When the RD cost for the EAT is not less than the RD cost for the DCT. the DCT 330 may operate. The optimal mode determining unit 320 may select an optimal mode from the EAT mode and the DCT mode, and one of the EAT 340 and the DCT 330 may be selectively operated based on the selected optimal mode. When the predictive-coded pixels are transformed by the EAT 340, information associated with an edge map may be coded and included in a bitstream or may be transmitted, to a decoding system, with the bitstream. Conversely, when the predictive-coded pixels are transformed by the DCT 330, an edge map may not be used and thus, information associated with an edge may not be encoded or not be transmitted. The information associated with the optimal mode selected by the optimal mode determining unit 320 may be encoded and transmitted to the decoding system. The pixels transformed by DCT 330 or the EAT 340 may be transmitted to the quantization unit 350 for quantization.

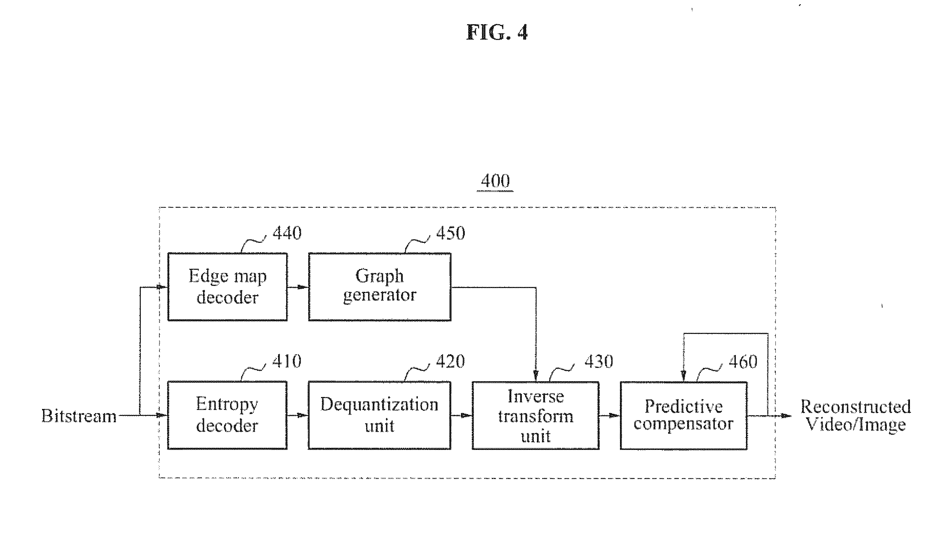

FIG. 4 illustrates a configuration of a decoding system 400 according to an embodiment. The decoding system 400 may receive a bitstream inputted from the coding system 100. The decoding system 400 may include an entropy decoder 410, a dequantization unit 420, an inverse transform unit 430, an edge map decoder 440, a graph generator 450, and a predictive compensator 460.

The entropy decoder 410 may entropy-decode the inputted bitstream to decode pixels. The coding system 100 may entropy-encode the pixels to generate a bitstream, and when the bit stream is transmitted to the decoding system 400, the entropy-decoder 410 may entropy-decode the inputted bitstream to decode the pixels.

The dequantization unit 420 may dequantize the entropy-decoded pixels. According to the embodiment, the dequantization unit 420 may generally receive, as an input, an output of the entropy decoder 410. Depending on cases, the dequantization unit 420 may receive, as an input, an output of the inverse transform unfit 430. When the output of the entropy-decoder 410 is received as the input, an output of the dequantization unit 420 may be transmitted as an input of the inverse transform unit 430, and when the output of the inverse transform 430 is received as the input, the output of the dequantization unit 420 may be transmitted to the predictive compensator 460.

The inverse transform unit 430 may inverse transform the decoded pixels. In this example, the inverse transform unit 430 may inverse transform the decoded pixels based on a graph generated based on the edge map decoder 440 and the graph generator 450. For example, the inverse transform unit 430 may generate an EAT coefficient that is generated based on an eigenvector matrix of the Laplacian of the graph, and may inverse transform the decoded pixels based on the generated EAT coefficient.

The edge map decoder 440 may decode information indicating edge locations in the inputted bitstream. The information indicating the edge locations may include an edge map included in the bitstream.

The graph generator 450 may generate the graph based on the decoded information. The inverse transform unit 430 may inverse transform the decoded pixels based on the graph generated by the graph generator 450. In this example, a method of generating the graph may be performed in the same manner as the graph generating method of FIG. 1.

The predictive compensator 460 may compensate for pixel values of currently inputted transformed pixels based on predictive values with respect to previous pixels to reconstruct pixels of an original image.

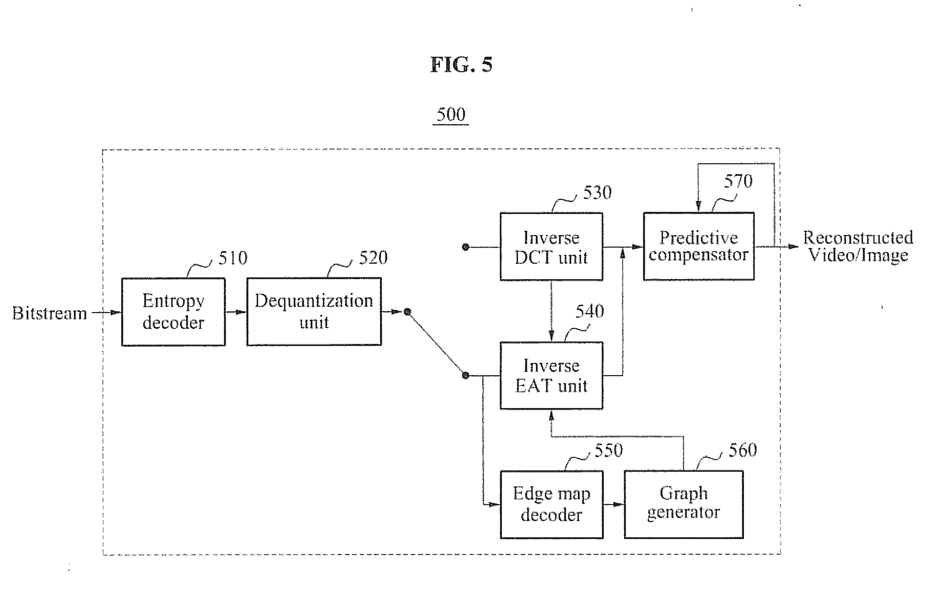

FIG. 5 illustrates a configuration of a decoding system 500 according to another embodiment. The decoding system 500 may receive a bitstream from an encoding system 300 of FIG. 3. The decoding system 500 includes an entropy-decoder 510, a dequantization unit 520, an inverse DCT unit 530, an inverse EAT unit 540, edge map decoder 550, a graph generator 560, and a predictive compensator 570. The entropy-decoder 510, the dequantization unit 520, the edge map decoder 550, the graph generator 560, and the predictive compensator 570 may correspond to the entropy-decoder 410, the dequantization unit 420, the edge map decoder 440, the graph generator 450, and the predictive compensator 460, respectively. Accordingly, detailed descriptions thereof will be omitted. The dequantization unit 520 may be configured to receive an output of the inverse DCT 530 and an output of the inverse EAT 540 unit as inputs, to correspond to the descriptions of FIG. 4.

The entropy-decoded pixels may be inputted to the inverse DCT unit 530 or the inverse EAT unit 540. In this example, a transform mode included in a bitstream or received together with the bitstream may determine whether the entropy-decoded pixels is to be inputted to the inverse DCT unit 530 or to the inverse EAT unit 540. The transform mode may correspond to an optimal mode described with reference to FIG. 3. One of the inverse EAT unit 540 using an inverse EAT and the inverse DCT 530 unit using an inverse DCT may be selected based on a type of transform used to transform the pixels in the coding system 300 of FIG. 3, from among an EAT or a DCT.

In this example, the EAT unit 540 may inverse transform the entropy decoded pixels based on a graph generated based on the graph generator 560.

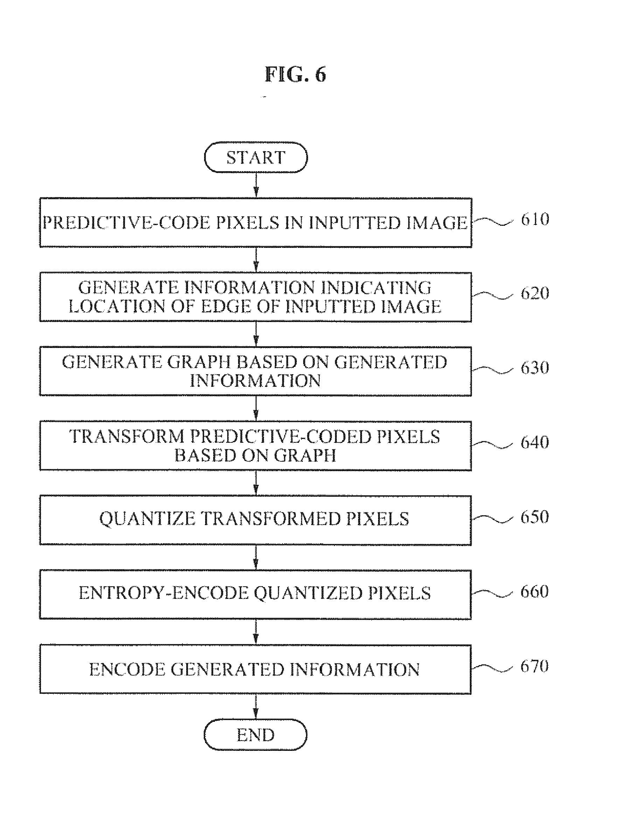

FIG. 6 illustrates a coding method according to an embodiment. The coding method may be performed by the coding system 100 of FIG. 1.

In operation 610, the coding system 100 performs predictive-coding of pixels in an inputted image. For example, the coding system 100 may predict each block of pixels from the inputted image, such as an image or a video frame, based on reconstructed pixels obtained from previously encoded blocks. In this example, a residual block may be generated from each block of the predictive-coded pixels.

In operation 620, the coding system 100 generates information associated with edge locations from the inputted image. For example, the coding system 100 may detect the edge locations from the described residual block to generate a binary edge map indicating the edge locations.

In operation 630, the coding system 100 generates a graph based on the generated information. In this example, the coding system 100 may generate the graph by connecting each pixel in the residual block to a neighbor pixel, when an edge does not exist between the corresponding pixel and the corresponding neighbor pixel.

In operation 640, the coding system 100 transforms the predictive-coded pixels based on the graph. For example, the coding system 100 may construct an EAT on the graph, based on an eigenvector of a Laplacian of the graph. A matrix L denoting the Laplacian may be calculated as a difference between a degree matrix and an adjacency matrix. The decoding system 100 may generate the EAT coefficient based on a transform previously calculated with respect pixels for a fixed set of edge structures that are common from among the predictive-coded pixels and stored or may generate the EAT coefficient based on a transform with respect to each of connected components of the graph.

In operation 650, the coding system 100 quantizes the transformed pixels.

In operation 660, the coding system 100 performs entropy-coding of the quantized pixels. In this example, the entropy-coding may generate a bitstream.

In operation 670, the coding system 100 encodes generated information. The coding system 100 may encode an edge map. The encoded edge map may be included in the bit stream or may be transmitted together with the bitstream.

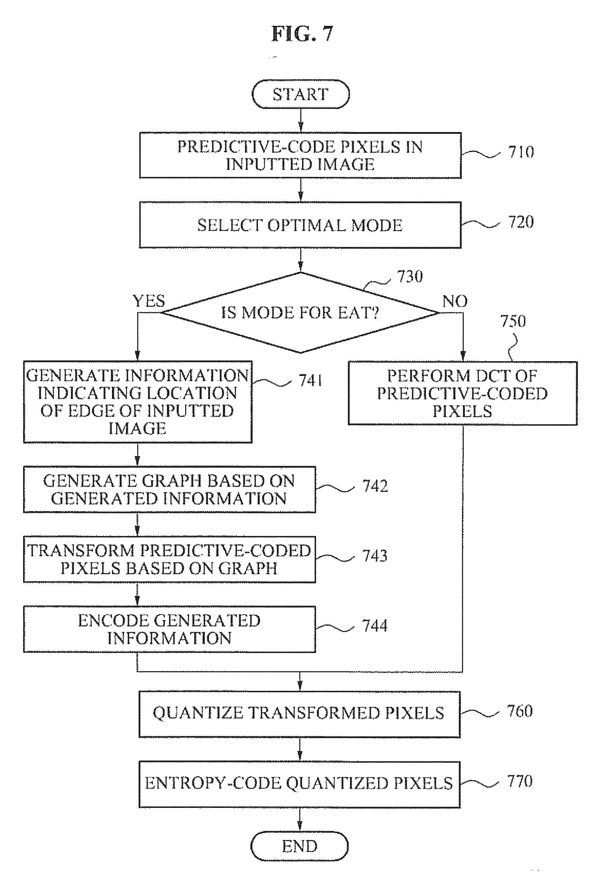

FIG. 7 illustrates a coding method according to another embodiment. The coding method may be performed by the coding system 300 of FIG. 3.

In operation 710, the coding system 300 may predictive-code pixels of an inputted image. For example, the coding system 100 may predict each block of pixels in the inputted image, such as an image and a video frame, based on reconstructed pixels obtained from previously coded blocks. In this example, a residual block may be generated from each block of predictive-coded pixels.

In operation 720, the coding system 300 may select an optimal mode. In this example, the coding system 300 may select one of a DCT mode and an EAT mode. The coding system 300 may calculate a bit rate and a distortion of each of a DCT and an EAT. The coding system 300 may calculate an RD cost of each of the DCT and the EAT, based on the corresponding calculated bit rate and distortion. In this example, when the RD cost for the EAT is less than the RD cost for the DCT, the EAT mode is selected as the optimal mode, and when the RD cost for the EAT is not less than the RD cost for the DCT, the DCT mode may be selected as the optimal mode.

In operation 730, the coding system 300 may perform operation 741 when the optimal mode is in the EAT mode, and may perform operation 750 when the optimal mode is the DCT mode.

In operation 741, the coding system 300 may generate information indicating edge locations in the inputted image. For example, the coding system 300 may detect the edge locations from the described residual block to generate an edge map indicating the edge locations.

In operation 742, the coding system 300 may generate a graph by connecting each pixel in the residual block to a neighbor pixel, when an edge does not exist between the corresponding pixel and the corresponding neighbor pixel.

In operation 743, the coding system 300 may transform predictive-coded pixels based on the graph. For example, the coding system 300 may generate the EAT coefficient on the graph based on an eigenvector of the Laplacian of the graph. A matrix *L* denoting the Laplacian of the graph may be calculated as a difference between a degree matrix and an adjacency matrix. The coding system 300 may generate the EAT coefficient based on a transform that is previously calculated with respect to pixels for a fixed set of edge structures that are common from among the predictive-coded pixels and stored, or may generate the EAT coefficient based on a transform with respect to each of connected components of the graph.

In operation 744, the coding system 300 encodes generated information. The coding system 300 may encode an edge map. The encoded edge map may be included in a bitstream or may be transmitted together with the bitstream.

In operation 750, the coding system 300 performs DCT of the predictive-coded pixels.

In operation 760, the decoding system 300 quantizes the transformed pixels.

In operation 770, the coding system 300 may entropy-code the quantized pixels. In this example, the entropy-coding may generate a bitstream. The generated bitstream may include information associated with an optimal mode or information associated with the encoded edge map.

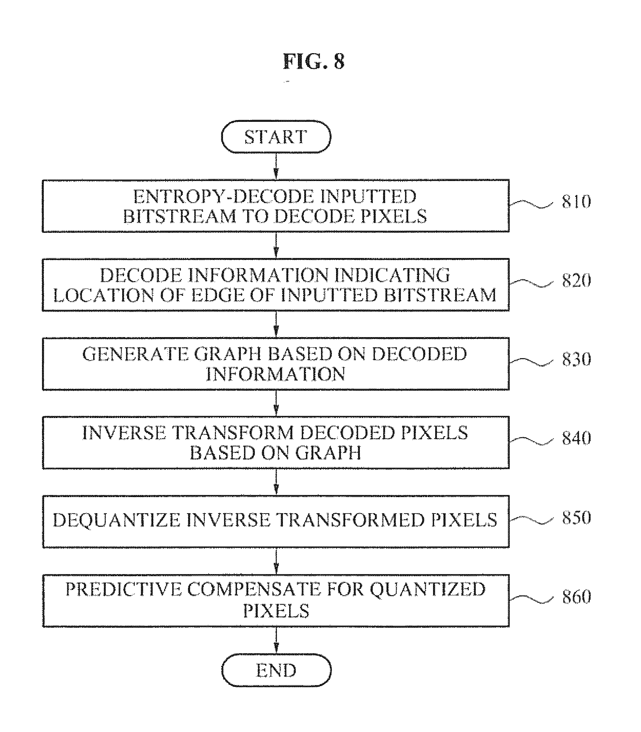

FIG. 8 illustrates a decoding method according to an embodiment. The decoding method may be performed by the decoding system 400.

In operation 810, the decoding system 400 entropy-decodes an inputted bitstream to decode pixels. The coding system 100 may entropy-code the pixels to generate a bitstream, and when the bitstream is transmitted to the decoding system 400, the decoding system 400 may entropy-decode the inputted bitstream to decode the pixels.

In operation 820, the coding system 400 decodes information indicating edge locations in the inputted bitstream. The information indicating the edge locations may include an edge map included in the bitstream.

In operation 830, the coding system 400 generates a graph based on the decoded information. In this example, the decoding system 400 may generate the graph by connecting each pixel in a residual block with respect to the decoded pixels to a neighbor pixel, when an edge does not exist between the corresponding pixel and the corresponding neighbor pixel.

In operation 840, the decoding system 400 inverse transforms the decoded pixels based on the graph. In this example, the decoding system 400 may generate an EAT coefficient based on an eigenvector matrix of Laplacian of a graph, and may inverse transform the decoded pixels, based on the generated EAT coefficient. In this example, the decoding system 400 may generate the EAT coefficient based on a transform previously calculated with respect to pixels for a fixed set of edge structures that are common from among the previous-coded pixels and stored, or may generate the EAT coefficient based on a transform with respect to each of connected component of the graph.

In operation 850, the decoding system 400 dequantizes the inverse transformed pixels.

In operation 860, the decoding system 400 predictive compensates for the quantized pixels. In this example, the decoding system 400 compensates for pixels values of the currently inputted transformed pixels to reconstruct pixels of an original image.

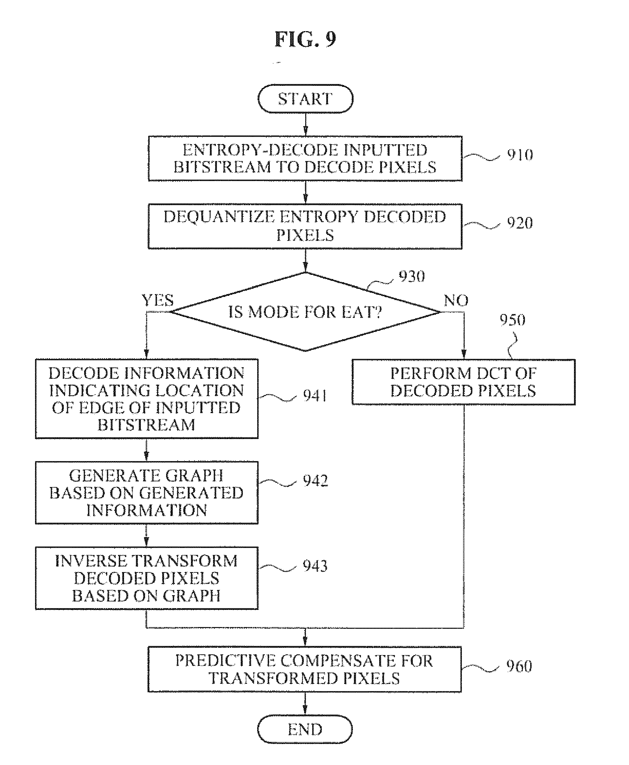

FIG. 9 illustrates a decoding method according to another embodiment. The decoding method may be performed by the decoding system 500.

In operation 910, the decoding system 500 entropy-decodes an inputted bitstream to decode pixels.

In operation 920, the decoding system 500 dequantizes the entropy-decided pixels.

In operation 930, the decoding system 500 performs operation 941 when a transform mode is in an EAT mode, and performs operation 950 when a transform mode is in a DCT mode.

In operation 941, the decoding system 500 decodes information indicating edge locations of an inputted bitstream. For example, the decoding system 500 may detect the edge locations from a residual block with respect to entropy-decoded pixels, to generate a binary edge map indicating the edge locations.

In operation 942, the decoding system 500 may generate a graph based on generated information, In this example, the decoding system 500 may generate the graph by connecting each pixel in the residual block to a neighbor pixel, when an edge does not exist between the corresponding pixel and the corresponding neighbor pixel.

In operation 943, the decoding system 500 transforms predictive-coded pixels based on the graph. In this example, the decoding system 500 may generate an EAT coefficient based on an eigenvector of Laplacian of the graph, and may inverse transform the decoded pixels, based on the generated EAT coefficient. In this example, the decoding system 500 may generate the EAT coefficient based on a transform previously calculated with respect to pixels for a fixed set of edge structures that are common from among the predictive-coded pixels and stored, or may generate the EAT coefficient based on a transform with respect to each of connected components of the graph.

In operation 950, the decoding system performs inverse DCT of the decoded pixels.

In operation 960, the decoding system 500 predictive compensates for the transformed pixels. The decoding system 500 may compensate for pixel values of the currently inputted transformed pixels based on the predictive values with respect to previous pixels to reconstruct pixels of an original image.

Descriptions omitted in descriptions with reference to FIGS. 6 through 9 may be understood based on the descriptions with reference to FIGS. 1 through 5.

According to embodiments, an image may be coded and decoded based on an EAT. A bit rate and/or distortion may be reduced by selectively using one of an EAT and a DCT.

The method for coding/decoding according to the above-described example embodiments may also be implemented through non-transitory computer readable code/instructions in/on a medium, e.g., a non-transitory computer readable medium, to control at least one processing element to implement any above described embodiment. The medium can correspond to medium/media permitting the storing or transmission of the non-transitory computer readable code.

The computer readable code can be recorded or transferred on a medium in a variety of ways, with examples of the medium including recording media, such as magnetic storage media (e.g., ROM, floppy disks, hard disks, etc.) and optical recording media (e.g., CD-ROMs, or DVDs), and transmission media. The media may also be a distributed network, so that the non-transitory computer readable code is stored or transferred and executed in a distributed fashion. Still further, as only an example, the processing element could include a processor or a computer processor, and processing elements may be distributed or included in a shingle device.

In addition to the above described embodiments, example embodiments can also be implemented as hardware, e.g., at least one hardware based processing unit including at least one processor capable of implementing any above described embodiment.

Although a few embodiments have been shown and described, it would be appreciated by those skilled in the art that changes may be made in these embodiments without departing from the principles and spirit of the disclosure, the scope of which is defined by the claims and their equivalents.

## Claims

1. A coding system, comprising:

   a predictive-coder to perform predictive-coding of pixels in an inputted image:
   an edge map generator to generate information indicating edge locations in the inputted image;
   a graph generator to generate a graph based on the generated information;
   a transform unit to transform the predictive-coded pixels based on the graph; and
   an edge map coder to encode the generated information.

2. The coding system of claim 1, wherein the transform unit transforms the predictive-coded pixels based on an edge-adaptive transform (EAT) coefficient generated based on an eigenvector matrix of Laplacian of the graph.

3. The coding system of claim 1, wherein the transform unit generates an EAT coefficient based on a transform that is previously calculated with respect to pixels for a fixed set of edge structures that are common from among the predictive-coded pixels and stored, and transforms the predictive-coded pixels based on the generated EAT coefficient.

4. The coding system of claim 3, wherein the transform unit generates the EAT coefficient based on a transform for each of connected components of the graph, and transforms the predictive-coded pixels based on the generated EAT coefficient.

5. The coding system of claim 1, wherein the edge-map detects the edge locations from a residual block with respect to the predictive-coded pixels to generate an edge map indicating the edge locations.

6. The coding system of claim 1, wherein the graph generator connects each pixel in a residual block with respect to the predictive-coded pixels to a neighbor pixel when an edge does not exist between the corresponding pixel and the corresponding neighbor pixel.

7. The coding system of claim 1. wherein the graph generator generates the graph based on an adjacency matrix indicating information associated with each pixel that is included in a residual block with respect to the predictive-coded pixels and does not include an edge between the corresponding pixel and a corresponding neighbor pixel.

8. A coding system, comprising:

   a predictive coder to perform predictive-coding of pixels in an inputted image;
an optimal mode determining unit to select an optimal mode; and
an edge-adaptive transform (EAT) unit to perform EAT with respect to the predictive-coded pixels when an EAT mode is selected as the optimal mode,
wherein the optimal mode is selected based on a rate-distortion (RD) cost of the EAT and a rate-distortion cost of a discrete cosine transform (DCT).

9. The coding system of claim 8, wherein the optimal mode includes one of an EAT mode and a discrete cosine transform (DCT) mode.

10. The coding system of claim 8, wherein the EAT unit comprises:

    an edge map generator to generate information indicating edge locations in the inputted image;
    a graph generator to generate a graph based on the generated information;
    a transform unit to transform the predictive-coded pixels based on the graph; and
    an edge map code to encode the generated information.

11. The coding system of claim 8, wherein the RD cost of the EAT is calculated based on a distortion for the EAT, a bit rate for the EAT, and a bit rate for a coded edge map used for the EAT.

12. A decoding system, comprising:

    an entropy decoder to entropy-decode an inputted bitstream to decode pixels;
    an information decoder to decode information indicating edge locations in the inputted bitstream;
    a graph generator to generate a graph based on the decoded information; and
    a inverse transform unit to inverse transform the entropy-decoded pixels, based on the graph.

13. The decoding system of claim 12, wherein the graph generator to generate the graph by connecting each pixel included in a residual block with respect to the decoded pixels to a neighbor pixel when an edge does not exists between the corresponding pixel and the corresponding neighbor pixel.

14. A decoding system, comprising:

    an entropy-decoder to entropy-decode an inputted bitstream to decode pixels; and
    an inverse edge-adaptive transform (EAT) unit to perform inverse EAT of the entropy-decoded pixels when a transform mode is in an EAT mode,
    wherein the transform mode is determined based on an RD cost of the EAT and an RD cost of a discrete cosine transform (DCT).

15. The decoding system of claim 14, wherein the RD cost of the EAT is calculated based on a distortion for the EAT, a bit rate for the EAT, and a bit rate for a coded edge map used for the EAT.

16. A coding method, comprising:

    predictive-coding pixels of an inputted image;
    generating information indicating edge locations in the inputted image:
    generating a graph based on the generated information;
    transforming the predictive-coded pixels based on the graph; and
    coding the generated information.

17. A coding method, comprising:

    predictive-coding pixels of an inputted image;
    selecting an optimal mode; and
    performing edge-adaptive transform (EAT) with respect to the predictive-coded pixels, when an EAT mode is selected as the optimal mode,
    wherein the optimal mode is selected based on a rate-distortion (RD) cost of the EAT and an RD cost of a discrete cosine transform (DCT).

18. A decoding method, comprising:

    decoding pixels by entropy-decoding an inputted bitstream;
    decoding information indicating edge locations in the inputted bitstream;
    generating a graph based on the decoded information; and
    performing inverse transform of the decoded pixels based on the graph.

19. A decoding method, comprising:

    decoding pixels by entropy-decoding an inputted bitstream:
    performing inverse edge-adaptive transform (EAT) of the entropy-decoded pixels when a transform mode is in an EAT mode,
    wherein the transform mode is determined based on an RD cost of the EAT and an RD cost of discrete cosine transform (DCT).

20. A non-transitory computer readable recoding medium storing a program implementing a method of claim 16.

**FIG. 1**

EP 2 582 140 A2

FIG. 2

**FIG. 3**

<u>300</u>

FIG. 4

EP 2 582 140 A2

400

440

450

Edge map
decoder

Graph
generator

410

420

430

460

Bitstream

Entropy
decoder

Dequantization
unit

Inverse
transform
unit

Predictive
compensator

Reconstructed
Video/Image

**FIG. 5**

EP 2 582 140 A2

# FIG. 6

```
                    ┌─────────────┐
                    │    START    │
                    └──────┬──────┘
                           │
                           ▼
   ┌─────────────────────────────────────────────┐
   │ PREDICTIVE-CODE PIXELS IN INPUTTED IMAGE      │──── 610
   └───────────────────────┬─────────────────────┘
                           │
                           ▼
   ┌─────────────────────────────────────────────┐
   │      GENERATE INFORMATION INDICATING          │
   │   LOCATION OF EDGE OF INPUTTED IMAGE          │──── 620
   └───────────────────────┬─────────────────────┘
                           │
                           ▼
   ┌─────────────────────────────────────────────┐
   │      GENERATE GRAPH BASED ON GENERATED        │
   │                INFORMATION                    │──── 630
   └───────────────────────┬─────────────────────┘
                           │
                           ▼
   ┌─────────────────────────────────────────────┐
   │    TRANSFORM PREDICTIVE-CODED PIXELS          │
   │             BASED ON GRAPH                    │──── 640
   └───────────────────────┬─────────────────────┘
                           │
                           ▼
   ┌─────────────────────────────────────────────┐
   │      QUANTIZE TRANSFORMED PIXELS              │──── 650
   └───────────────────────┬─────────────────────┘
                           │
                           ▼
   ┌─────────────────────────────────────────────┐
   │     ENTROPY-ENCODE QUANTIZED PIXELS           │──── 660
   └───────────────────────┬─────────────────────┘
                           │
                           ▼
   ┌─────────────────────────────────────────────┐
   │      ENCODE GENERATED INFORMATION             │──── 670
   └───────────────────────┬─────────────────────┘
                           │
                           ▼
                    ┌─────────────┐
                    │     END     │
                    └─────────────┘
```

**FIG. 7**

```
                    ┌─────────┐
                    │  START  │
                    └────┬────┘
                         │
                         ▼
        ┌──────────────────────────────────┐
        │   PREDICTIVE-CODE PIXELS IN       │  ~ 710
        │        INPUTTED IMAGE             │
        └────────────────┬─────────────────┘
                         │
                         ▼
        ┌──────────────────────────────────┐
        │       SELECT OPTIMAL MODE         │  ~ 720
        └────────────────┬─────────────────┘
                         │
                         ▼            ~ 730
        YES        ◇─────────────────◇      NO
      ◄────────────  IS MODE FOR EAT?  ────────────►
                   ◇─────────────────◇              ~ 750
         │                                    │
         ▼                                    ▼
 ┌────────────────────┐              ┌────────────────────┐
 │ GENERATE INFORMATION│  ~ 741      │  PERFORM DCT OF     │
 │ INDICATING LOCATION │             │ PREDICTIVE-CODED    │
 │ OF EDGE OF INPUTTED │             │     PIXELS          │
 │      IMAGE          │             └──────────┬─────────┘
 └─────────┬──────────┘                         │
           │                                    │
           ▼                                    │
 ┌────────────────────┐                         │
 │ GENERATE GRAPH BASED│  ~ 742                  │
 │ ON GENERATED INFO   │                         │
 └─────────┬──────────┘                         │
           │                                    │
           ▼                                    │
 ┌────────────────────┐                         │
 │ TRANSFORM PREDICTIVE│  ~ 743                  │
 │ -CODED PIXELS BASED │                         │
 │      ON GRAPH       │                         │
 └─────────┬──────────┘                         │
           │                                    │
           ▼                                    │
 ┌────────────────────┐                         │
 │  ENCODE GENERATED   │  ~ 744                  │
 │    INFORMATION      │                         │
 └─────────┬──────────┘                         │
           │                                    │
           └──────────────┬─────────────────────┘
                          │
                          ▼
        ┌──────────────────────────────────┐
        │   QUANTIZE TRANSFORMED PIXELS     │  ~ 760
        └────────────────┬─────────────────┘
                         │
                         ▼
        ┌──────────────────────────────────┐
        │  ENTROPY-CODE QUANTIZED PIXELS    │  ~ 770
        └────────────────┬─────────────────┘
                         │
                         ▼
                    ┌─────────┐
                    │   END   │
                    └─────────┘
```

## FIG. 8

```
                    ┌─────────────┐
                    │    START    │
                    └─────────────┘
                           │
                           ▼
    ┌──────────────────────────────────────────┐
    │      ENTROPY-DECODE INPUTTED              │ ~ 810
    │    BITSTREAM TO DECODE PIXELS             │
    └──────────────────────────────────────────┘
                           │
                           ▼
    ┌──────────────────────────────────────────┐
    │     DECODE INFORMATION INDICATING         │ ~ 820
    │ LOCATION OF EDGE OF INPUTTED BITSTREAM    │
    └──────────────────────────────────────────┘
                           │
                           ▼
    ┌──────────────────────────────────────────┐
    │   GENERATE GRAPH BASED ON DECODED         │ ~ 830
    │            INFORMATION                    │
    └──────────────────────────────────────────┘
                           │
                           ▼
    ┌──────────────────────────────────────────┐
    │   INVERSE TRANSFORM DECODED PIXELS        │ ~ 840
    │          BASED ON GRAPH                   │
    └──────────────────────────────────────────┘
                           │
                           ▼
    ┌──────────────────────────────────────────┐
    │  DEQUANTIZE INVERSE TRANSFORMED PIXELS    │ ~ 850
    └──────────────────────────────────────────┘
                           │
                           ▼
    ┌──────────────────────────────────────────┐
    │  PREDICTIVE COMPENSATE FOR QUANTIZED      │ ~ 860
    │              PIXELS                       │
    └──────────────────────────────────────────┘
                           │
                           ▼
                    ┌─────────────┐
                    │     END     │
                    └─────────────┘
```

# FIG. 9

START

ENTROPY-DECODE INPUTTED
BITSTREAM TO DECODE PIXELS — 910

DEQUANTIZE ENTROPY DECODED
PIXELS — 920

IS MODE FOR EAT? — 930

YES

NO — 950

DECODE INFORMATION
INDICATING LOCATION
OF EDGE OF INPUTTED
BITSTREAM — 941

PERFORM DCT OF
DECODED PIXELS

GENERATE GRAPH
BASED ON GENERATED
INFORMATION — 942

INVERSE TRANSFORM
DECODED PIXELS
BASED ON GRAPH — 943

PREDICTIVE COMPENSATE FOR
TRANSFORMED PIXELS — 960

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61353810 B

- KR 10101000772541